(19) **Europäisches Patentamt / European Patent Office / Office européen des brevets**

(11) **EP 1 845 647 A1**

(12) # EUROPEAN PATENT APPLICATION
published in accordance with Art. 158(3) EPC

(43) Date of publication:
**17.10.2007 Bulletin 2007/42**

(51) Int Cl.:
**H04J 11/00** $^{(2006.01)}$

(21) Application number: **06712842.1**

(22) Date of filing: **01.02.2006**

(86) International application number:
**PCT/JP2006/301699**

(87) International publication number:
**WO 2006/082865 (10.08.2006 Gazette 2006/32)**

(84) Designated Contracting States:
**DE FR GB IT**

(30) Priority: **02.02.2005 JP 2005026497**

(71) Applicant: **Suehiro, Naoki**
**Tsukuba-shi,**
**Ibaraki 305-0031 (JP)**

(72) Inventor: **Suehiro, Naoki**
**Tsukuba-shi,**
**Ibaraki 305-0031 (JP)**

(74) Representative: **Rees, Alexander Ellison et al**
**Urquhart-Dykes & Lord LLP**
**30 Welbeck Street**
**London W1G 8ER (GB)**

(54) **TRANSMITTING/RECEIVING METHOD, METHOD FOR GENERATING SIGNAL SEQUENCES HAVING NO PERIODIC CORRELATIONS THEREBETWEEN, AND COMMUNICATION APPARATUS**

(57) In a transmitting/receiving method, a transmitter device transmits a vertical polarization signal and a horizontal polarization signal, and a receiver device receives the vertical and horizontal polarization signals transmitted by the transmitter device. The vertical polarization signal includes a vertical polarization ID signal which identifies vertical polarization and a vertical polarization data signal which is a data signal. The horizontal polarization signal includes a horizontal polarization ID signal which identifies horizontal polarization and a horizontal polarization data signal which is a data signal. The vertical polarization ID signal and the horizontal polarization ID signal are transmitted simultaneously. The vertical polarization ID signal, the horizontal polarization ID signal, and the vertical polarization data signal are generated from signal sequences having orthogonal correlation. The vertical polarization ID signal, the horizontal polarization ID signal, and the horizontal polarization data signal are generated from signal sequences having orthogonal correlation.

FIG.1

**Description**

TECHNICAL FIELD

This invention relates to a transmitting/receiving method, a method of generation of signal sequences having no periodic correlation, and a communication device.

BACKGROUND ART

Conventionally, in the field of wireless communications, there is known an orthogonal polarization wireless-communications system which transmits two orthogonal polarization waves (vertically and horizontal polarization waves, or left and right elliptical polarization waves) on which separate information items are carried, and exploits frequency resources effectively. See Patent Documents 1 and 2.

[Patent Document 1]
Japanese Patent No. 3171329
[Patent Document 2]
Japanese Laid-Open Patent Application No. 9-214461

However, when using orthogonal polarization, interference between orthogonal polarization waves arises due to rainy weather, multiple path, etc. It has been difficult for the conventional systems to remove interference between orthogonal polarization waves simply.

DISCLOSURE OF THE INVENTION

According to one aspect of the invention, there is provided an improved transmitting/receiving method in which the above-mentioned problems are eliminated.

According to one aspect of the invention, there is provided any of a transmitting/receiving method, a method of generation of signal sequences having no periodic correlation, and a communication device which are adapted to simply remove interference between orthogonal polarization waves by transmitting simultaneously a vertical polarization ID signal identifying vertical polarization and a horizontal polarization ID signal identifying horizontal polarization.

In an embodiment of the invention which solves or reduces one or more of the above-mentioned problems, there is provided a transmitting/receiving method in which a transmitter transmits a vertical polarization signal and a horizontal polarization signal and a receiver receives the vertical polarization signal and the horizontal polarization signal from the transmitter, the transmitting/receiving method comprising: providing the vertical polarization signal to include a vertical polarization ID signal which identifies vertical polarization and a vertical polarization data signal which is a data signal; providing the horizontal polarization signal to include a horizontal polarization ID signal which identifies horizontal polarization and a horizontal polarization data signal which is a data signal; transmitting the vertical polarization ID signal and the horizontal polarization ID signal simultaneously; generating the vertical polarization ID signal, the horizontal polarization ID signal, and the vertical polarization data signal from signal sequences having orthogonal correlation; and generating the vertical polarization ID signal, the horizontal polarization ID signal, and the horizontal polarization data signal from signal sequences having orthogonal correlation.

In an embodiment of the invention which solves or reduces one or more of the above-mentioned problems, there is provided a transmitting/receiving method in which a transmitter includes N vertical polarization antennas and M horizontal polarization antennas where N is an integer above or equal to zero, M is an integer above or equal to zero, and $(N+M) \geq 2$, the transmitter transmitting vertical polarization signals by the N vertical polarization antennas and horizontal polarization signals by the M horizontal polarization antennas, and a receiver receives the vertical polarization signals and the horizontal polarization signals from the transmitter at vertical polarization antennas and horizontal polarization antennas respectively, the transmitting/receiving method comprising: providing each vertical polarization signal to include a vertical polarization ID signal which identifies vertical polarization and a vertical polarization data signal which is a data signal; providing each horizontal polarization signal to include a horizontal polarization ID signal which identifies horizontal polarization and a horizontal polarization data signal which is a data signal; providing the vertical polarization ID signals to be discretely different for each of the respective N vertical polarization antennas; providing the horizontal polarization ID signals to be discretely different for each of the respective M horizontal polarization antennas; transmitting the vertical polarization ID signals and the horizontal polarization ID signals simultaneously; generating the N vertical polarization ID signals, the M horizontal polarization ID signals, and the vertical polarization data signals from signal sequences having orthogonal correlation; and generating the N vertical polarization ID signals, the M horizontal polarization ID signals, and the horizontal polarization data signals from signal sequences having orthogonal correlation.

The above-mentioned transmitting/receiving method may be configured so that left elliptical polarization and right elliptical polarization are used instead of the vertical polarization and the horizontal polarization.

In an embodiment of the invention which solves or reduces one or more of the above-mentioned problems, there is provided a communication device comprising: a transmitter transmitting a vertical polarization signal and a horizontal polarization signal; and a receiver receiving a vertical polarization signal and a horizontal polarization signal transmitted by another communication device, wherein the vertical polarization signal is provided to include a vertical polarization ID signal which identifies vertical polarization and a vertical polarization data signal which is a data signal, and the horizontal polarization signal is provided to include a horizontal polarization ID signal which identifies horizontal polarization and a horizontal polarization data signal which is a data signal, wherein the transmitter is provided to transmit the vertical polarization ID signal and the horizontal polarization ID signal simultaneously, wherein the transmitter is provided to generate the vertical polarization ID signal, the horizontal polarization ID signal, and the vertical polarization data signal from signal sequences having orthogonal correlation, and generate the vertical polarization ID signal, the horizontal polarization ID signal, and the horizontal polarization data signal from signal sequences having orthogonal correlation.

In an embodiment of the invention which solves or reduces one or more of the above-mentioned problems, there is provided a communication device comprising: a transmitter including N vertical polarization antennas and M horizontal polarization antennas where N is an integer above or equal to zero, M is an integer above or equal to zero, and $(N+M) \geq 2$, the transmitter transmitting vertical polarization signals by the N vertical polarization antennas and horizontal polarization signals by the M horizontal polarization antennas; and a receiver receiving vertical polarization signals and horizontal polarization signals from another communication device at vertical polarization antennas and horizontal polarization antennas respectively, wherein each vertical polarization signal is provided to include a vertical polarization ID signal which identifies vertical polarization and a vertical polarization data signal which is a data signal, and each horizontal polarization signal is provided to include a horizontal polarization ID signal which identifies horizontal polarization and a horizontal polarization data signal which is a data signal, wherein the vertical polarization ID signals are provided to be discretely different for each of the respective N vertical polarization antennas, and the horizontal polarization ID signals are provided to be discretely different for each of the respective M horizontal polarization antennas, wherein the transmitter is provided to transmit the vertical polarization ID signals and the horizontal polarization ID signals simultaneously, and wherein the transmitter is provided to generate the N vertical polarization ID signals, the M horizontal polarization ID signals, and the vertical polarization data signals from signal sequences having orthogonal correlation, and generate the N vertical polarization ID signals, the M horizontal polarization ID signals, and the horizontal polarization data signals from signal sequences having orthogonal correlation.

The above-mentioned communication device may be configured so that left elliptical polarization and right elliptical polarization are used instead of the vertical polarization and the horizontal polarization.

In an embodiment of the invention which solves or reduces one or more of the above-mentioned problems, there is provided a method of generation of signal sequences having no periodic correlation, the method comprising: providing a predetermined signal sequence $S_0$; providing N row vectors of a DFT matrix $F_N$ of N rows and N columns which are respectively represented by vector $f_0$, vector $f_1$, ... vector $f_{N-1}$; generating signal sequences $T_0, T_1, T_2, ... T_{N-1}$ which are represented by

$$T_0 = \text{vector } f_{N,0} \otimes S_0,$$
$$T_1 = \text{vector } f_{N,1} \otimes S_0,$$
$$T_2 = \text{vector } f_{N,2} \otimes S_0,$$
$$...$$
$$T_{N-1} = \text{vector } f_{N,N-1} \otimes S_0$$

where $\otimes$ denotes Kronecker product; and generating N x M signal sequences having no periodic correlation by taking a Kronecker product between a corresponding one of the signals sequences $T_0, T_1, T_2, ... T_{N-1}$ and a corresponding one of M row vectors of a DFT matrix $F_M$ of M rows and M columns including vector $f_0$, vector $f_1$, ... vector $f_{M-1}$, respectively. Thereby, the M users can communicate mutually without interference by using the N signals respectively.

The above-mentioned communication device may be configured so that the transmitter is provided to generate the vertical polarization ID signal, the horizontal polarization ID signal, the vertical polarization data signal, and the horizontal polarization data signal from signal sequences having no mutual interference which are generated in accordance with the above-mentioned method of generation of the signal sequences having no periodic correlation.

The above-mentioned communication device may be configured so that left elliptical polarization and right elliptical polarization are used instead of the vertical polarization and the horizontal polarization.

The above-mentioned communication device may be configured so that, when k data signals to be transmitted by k communication devices where k is an integer equal to 2 or above are represented by signal 0, signal 1, ..., signal (k-2), and signal (k-1), respectively, and N row vectors of a DFT matrix $F_N$ of N rows and N columns are represented by vector $f_0$, vector $f_1$, ... vector $f_{N-1}$, respectively, the k communication devices are provided to respectively transmit vector $f_{N,0} \otimes$ signal 0, vector $f_{N,1} \otimes$ signal 1, ... vector $f_{N,k-2} \otimes$ signal (k-2), vector $f_{N,k-1} \otimes$ signal (k-1) where $\otimes$ denotes Kronecker product.

EFFECT OF THE INVENTION

According to the present invention, it is possible to provide a transmitting/receiving method, a method which generates orthogonal signal sequences, and a communication device which are adapted to simply remove interference between orthogonal polarization waves.

BRIEF DESCRIPTION OF THE DRAWINGS

FIG. 1 is a block diagram showing the composition of a transmitting/receiving system in an embodiment of the invention.
FIG. 2 is a diagram for explaining the definition of a transmission signal.
FIG. 3 is a diagram for explaining the composition of a transmission signal.
FIG. 4 is a diagram for explaining an output of a matching filter.
FIG. 5 is a diagram for explaining an output of a matching filter in case of a multiple path.
FIG. 6 is a block diagram showing the composition of a transmitting/receiving system in an embodiment of the invention.
FIG. 7 is a diagram for explaining the composition of a transmission signal.
FIG. 8 is a diagram showing an example of a 4-phase orthogonal signal sequence with a period of 16 bits.
FIG. 9 is a diagram for explaining an output of a matching filter.
FIG. 10 is a diagram for explaining a variable $W_N$.
FIG. 11 is a diagram for explaining a DFT matrix of N rows and N columns.
FIG. 12 is a diagram for explaining a method of generation of new orthogonal signal sequences.
FIG. 13 is a diagram for explaining an output of a matching filter.
FIG. 14 is a diagram for explaining an output of a matching filter.
FIG. 15 is a diagram for explaining an example of assignment of orthogonal signal sequences.
FIG. 16 is a diagram for explaining an example of assignment of orthogonal signal sequences.

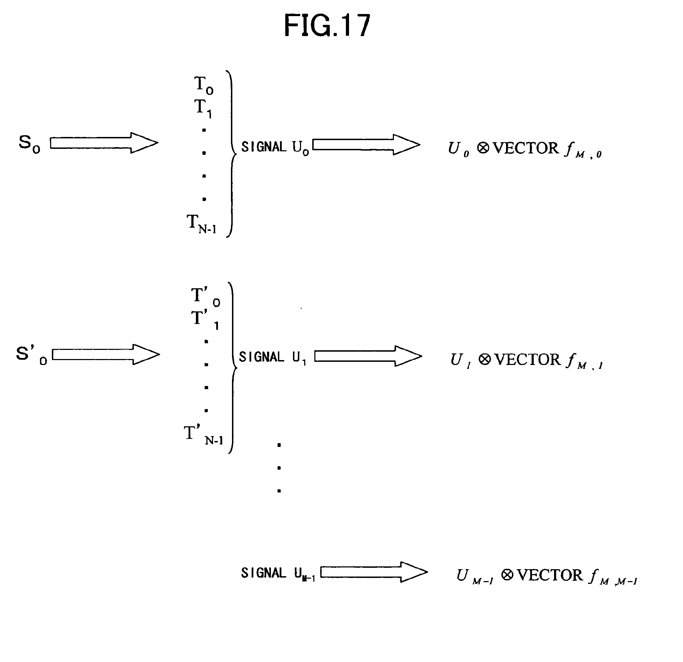

FIG. 17 is a diagram for explaining a method of generation of other orthogonal signal sequences.
FIG. 18 is a diagram for explaining generation of a pseudo-synchronizing signal.
FIG. 19 is a diagram for explaining a guard interval.

DESCRIPTION OF REFERENCE NUMERALS

| | |
|---|---|
| 11, 30 | transmitter device |
| 12, 31, 32 | vertical polarization antenna |
| 21, 40 | receiver device |
| 22, 41, 42 | vertical polarization antenna |
| 23, 43, 44 | horizontal polarization antenna |

BEST MODE FOR CARRYING OUT THE INVENTION

(Transmitting/Receiving System)

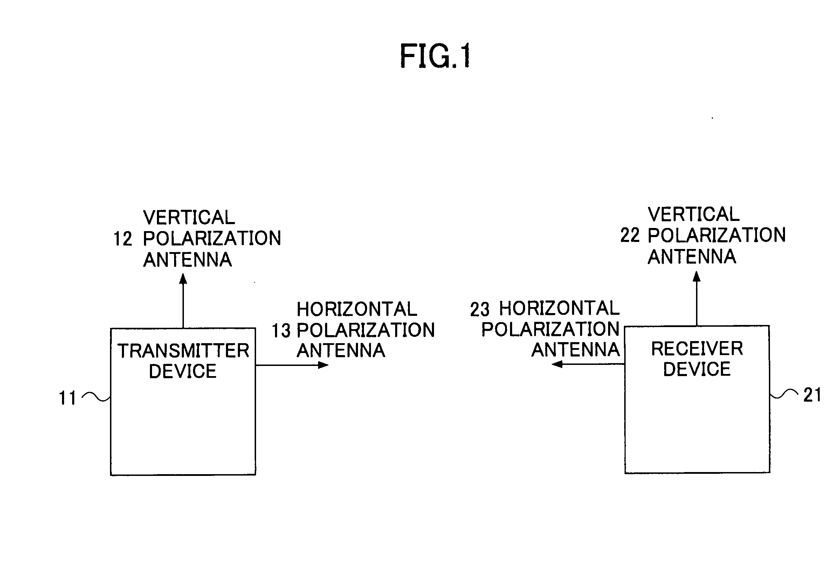

FIG. 1 shows the composition of a transmitting/receiving system in an embodiment of the invention.
The transmitting/receiving system of FIG. 1 includes a transmitter device 11 and a receiver device 21. The transmitter device 11 includes a vertical polarization antenna 12 and a horizontal polarization antenna 13. The receiver device 21 includes a vertical polarization antenna 22 and a horizontal polarization antenna 23.

Suppose that a signal x1 is transmitted by the vertical polarization antenna 12 of transmitter device 11, a signal x2 is transmitted by the horizontal polarization antenna 13, a signal y1 is received by the vertical polarization antenna 12 of receiver device 21, and a signal y2 is received by the horizontal polarization antenna 23.

In this case, the signal x1 transmitted by the vertical polarization antenna 12 of transmitter device 11 is received by the vertical polarization antenna 22 of receiver device 21 as a signal a11x1, and received by the horizontal polarization antenna 23 of receiver device 21 as a signal a21x1. And the signal x2 transmitted by the horizontal polarization antenna 13 of transmitter device 11 is received by the vertical polarization antenna 22 of receiver device 21 as a signal a12x2, and received by the horizontal polarization antenna 23 of receiver device 21 as a signal a22x2. The signals y1 and y2 are represented as follows.

$$y1 = a11x1 + a12x2 \qquad ... (1)$$

$$y2 = a21x1 + a22x2 \qquad ... (2)$$

If the following formula (3) is substituted,

$$\Delta = \begin{vmatrix} a11 & a12 \\ a21 & a22 \end{vmatrix} \qquad \cdots (3)$$

the signals x1 and x2 can be determined by the following formulas (4) and (5) according to Kramer's method.

$$x_1 = \begin{vmatrix} y1 & a12 \\ y2 & a22 \end{vmatrix} / \Delta \qquad \cdots (4)$$

$$x_2 = \begin{vmatrix} a11 & y1 \\ a21 & y2 \end{vmatrix} / \Delta \qquad \cdots (5)$$

Accordingly, if a11, a12, a21, and a22 can be determined, the transmitted signals x1 and x2 can be determined from the received signals y1 and y2 even when there is interference between the vertical polarization signal and the horizontal polarization signal.

In this embodiment, a11, a12, a21, and a22 are determined as follows.

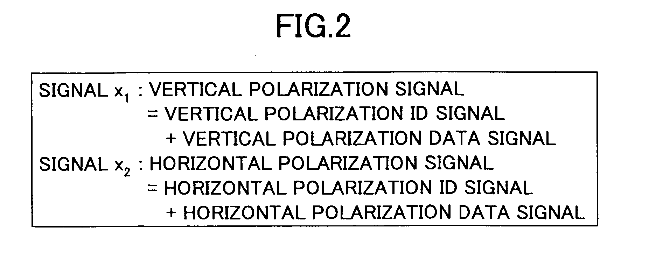

As shown in FIG. 2, the vertical polarization signal (signal x1) transmitted by the vertical polarization antenna 12 of transmitter device 11 is defined as being a vertical polarization ID signal identifying vertical polarization and a vertical polarization data signal which is a data signal, and the horizontal polarization signal (signal x2) transmitted by the horizontal polarization antenna 13 of transmitter device 11 is defined as being a horizontal polarization ID signal identifying horizontal polarization and a horizontal polarization data signal which is a data signal.

In the receiver, based on the vertical polarization ID signal and the horizontal polarization ID signal, the signal y1 received by the vertical polarization antenna 22 is separated into a vertical signal component of the vertical polarization signal (signal x1) transmitted by the vertical polarization antenna 12 of transmitter device 11 and a horizontal signal component of the horizontal polarization signal (signal x2) transmitted by the horizontal polarization antenna 13 of transmitter device 11, so that a11 is determined from the vertical signal component and a12 is determined from the horizontal signal component. Similarly, a21 and a22 are determined based on the signal y2 received by the horizontal polarization antenna 23.

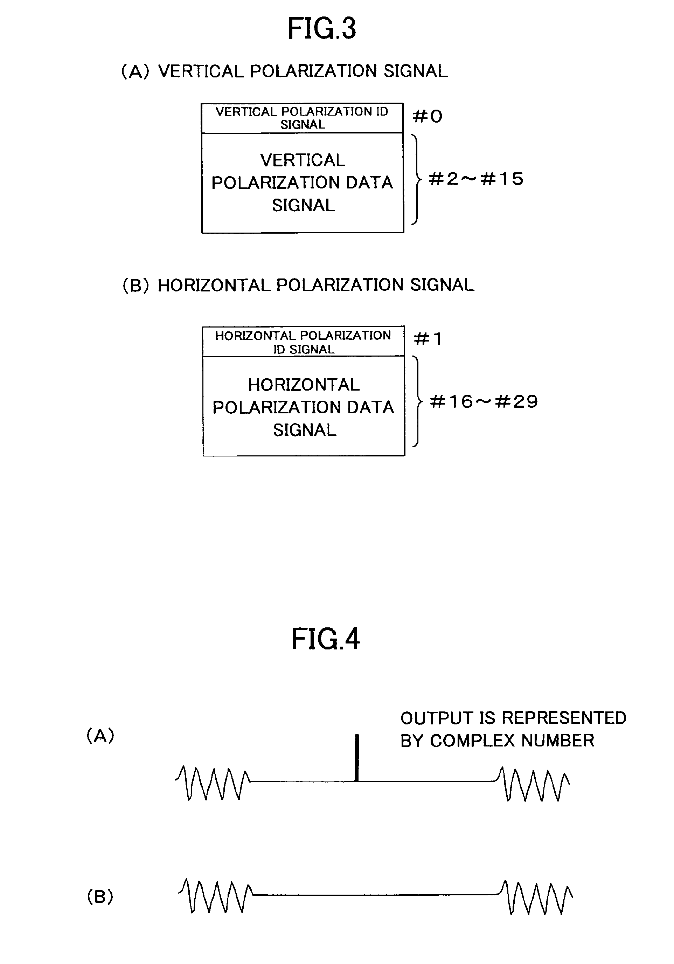

Specifically, as shown in FIG. 3 (A), the vertical polarization signal is constituted by a single vertical polarization ID signal (#0) and a plurality of vertical polarization data signals (#2-#15), and the horizontal polarization signal is constituted by a single horizontal polarization ID signal (#1) and a plurality of horizontal polarization data signals (#16-#39).

In this case, in order to determine the coefficients a11, a12, a21, and a22 from the received signals as mentioned above, it is necessary that the vertical polarization ID signal (#0), the horizontal polarization ID signal (#1), and the vertical and/or horizontal polarization data signals (#2-#39) be respectively generated from signal sequences having orthogonal correlation.

It is preferred that the signal sequences having orthogonal correlation show clear orthogonality even when the signals have time gaps.

However, the vertical polarization data signals (#2-#15) and the horizontal polarization data signals (#16-#39) are transmitted by separate polarization waves, the vertical polarization data signals (#2-#15) are transmitted along with the vertical polarization ID signal, and the horizontal polarization data signal (#16-#39) are transmitted along with the horizontal polarization ID signal. For this reason, it is satisfactory even if the horizontal polarization data signals (#16-#39) and the vertical polarization data signals (#2-#15) are generated from the same signal sequences. Namely, the signals pertaining to one of the two groups of (#2-#15) and (#16-#39) may be used as the vertical polarization data signals and the horizontal polarization data signals.

When one signal among the vertical polarization ID signal (#0), the horizontal polarization ID signal (#1), the vertical polarization data signals (#2-#15), and the horizontal polarization data signals (#16-#39), having orthogonal correlation, passes through a filter for receiving the signal (for example, a matching filter), an output of the filter can be obtained as shown in FIG. 4 (A). In this example, the output of the matching filter is obtained when the vertical polarization ID signal (#0) passes through the matching filter for receiving that signal.

On the other hand, when one signal among the vertical polarization ID signal (#0), the horizontal polarization ID signal (#1), and the vertical polarization and/or horizontal polarization data signals (#2-#39), having orthogonal correlation, passes through a filter for receiving the signal (for example, a matching filter), an output of the filter can be obtained as shown in FIG. 4 (B). In this example, the output of the matching filter is obtained when the horizontal polarization ID signal (#1) passes through the matching filter for receiving the vertical polarization ID signal (#0).

By using the above-mentioned characteristic, a multiple path characteristic of a transmission path can be detected based on the signals #0 - #39.

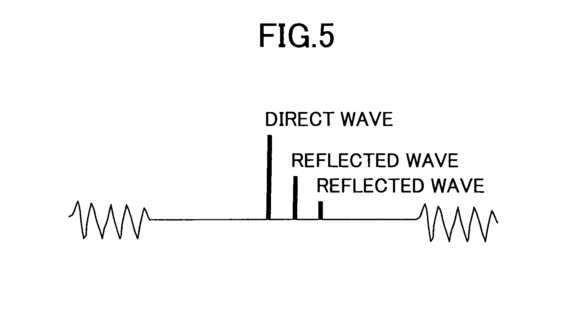

For example, when detecting a multiple path characteristic of a transmission path between a transmitter device and a received device based on the transmitted vertical polarization ID signal (#0), the signal is made to pass through the matching filter of the vertical polarization ID signal (#0) in the receiver device. The output of the filter, including a direct wave and a plurality of reflected waves, can be obtained as shown in FIG. 5. Thereby, the multiple path characteristic of the transmission path between the transmitter device and the receiver device can be detected.

Once the multiple path characteristic of the transmission path between the transmitter device and the receiver device is detected at the receiver device, removal of a multiple path can be carried out based on the detected multiple path characteristic.

Moreover, once the multiple path characteristic of the transmission path between the transmitter device and the receiver device is detected at the received device, the composite output of a direct wave and a multiple path wave can be obtained by adjusting the phase of the direct wave and the phase of the multiple path wave similar to RAKE reception.

(Transmitting/Receiving System)

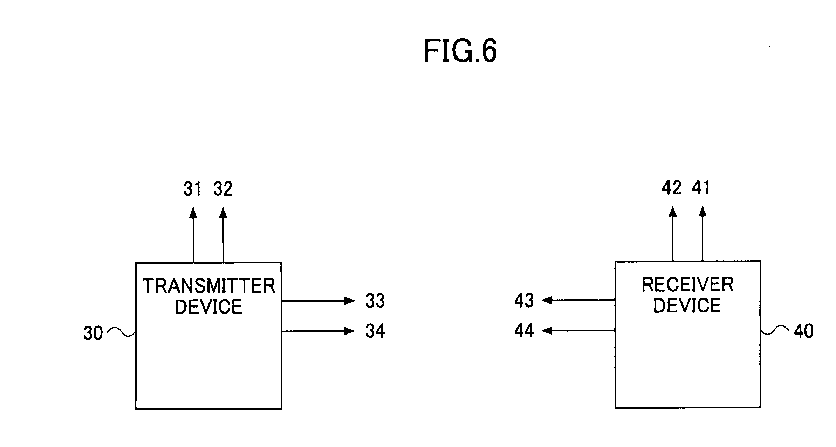

FIG. 6 shows the composition of a transmitting/receiving system in another embodiment of the invention. The transmitting/receiving system of FIG. 6 includes a transmitter device 30 and a receiver device 40. The transmitter device 30 includes vertical polarization antennas 31 and 32 and horizontal polarization antennas 33 and 34. The receiver device 40 include vertical polarization antennas 41 and 42 and horizontal polarization antennas 43 and 44.

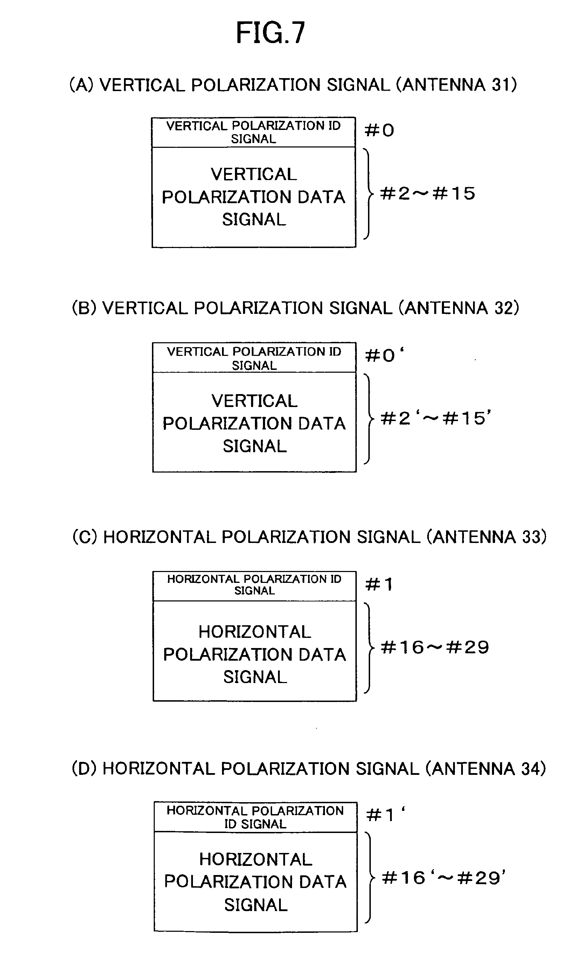

The vertical polarization signals shown in FIG. 7 (A) and (B) are transmitted by the vertical polarization antennas 31 and 32 of transmitter device 30 respectively, and the horizontal polarization signals shown in FIG. 7 (C) and (D) are transmitted by the horizontal polarization antennas 33 and 34 of transmitter device 30 respectively.

In order to receive data properly even when there is interference between vertical polarization and horizontal polarization, the vertical polarization signals and the horizontal polarization signals must meet the following orthogonal correlation requirements (1) - (4).

(1) The vertical polarization ID signal (#0) of antenna 31, the vertical polarization ID signal (#0') of antenna 32, the horizontal polarization ID signal (#1) of antenna 33, the horizontal polarization ID signal (#1') of antenna 34, and the vertical polarization data signals (#2-#15) transmitted by antenna 31 are generated from signal sequences having orthogonal correlation mutually.

(2) The vertical polarization ID signal (#0) of antenna 31, the vertical polarization ID signal (#0') of antenna 32, the horizontal polarization ID signal (#1) of antenna 33, the horizontal polarization ID signal (#1') of antenna 34, and the vertical polarization data signals (#2'-#15') transmitted by antenna 32 are generated from signal sequences having orthogonal correlation mutually.

(3) The vertical polarization ID signal (#0) of antenna 31, the vertical polarization ID signal (#0') of antenna 32, the horizontal polarization ID signal (#1) of antenna 33, the horizontal polarization ID signal (#1') of antenna 34, and the horizontal polarization data signals (#16-#29) transmitted by antenna 33 are generated from signal sequences having orthogonal correlation mutually.

(4) The vertical polarization ID signal (#0) of antenna 31, the vertical polarization ID signal (#0') of antenna 32, the horizontal polarization ID signal (#1) of antenna 33, the horizontal polarization ID signal (#1') of antenna 34, and the horizontal polarization data signals (#16'-#29') transmitted by antenna 34 are generated from signal sequences having orthogonal correlation mutually.

Generally, in a case in which a transmitter includes N vertical polarization antennas (where N is an integer equal to 2 or above) and M horizontal polarization antennas (where M is an integer equal to 2 or above) and the transmitter transmits the vertical polarization signals from the N vertical polarization antennas and the horizontal polarization signals from the M horizontal polarization antennas, the following requirements must be met.

(1) The vertical polarization ID signals are individually different for each of the N vertical polarization antennas, the horizontal polarization ID signals are individually different for each of the M horizontal polarization antennas, and the N vertical polarization ID signals, the M horizontal polarization ID signals, and the vertical polarization data signals are generated from signal sequences having orthogonal correlation.
(2) The vertical polarization ID signals are individually different for each of the N vertical polarization antennas, the horizontal polarization ID signals are individually different for each of the M horizontal polarization antennas, and the N vertical polarization ID signals, the M horizontal polarization ID signals, and the horizontal polarization data signals are generated from signal sequences having orthogonal correlation.

Even in this case, a multiple path characteristic can be detected based on the N vertical polarization ID signals, the M horizontal polarization ID signals, etc. having orthogonal correlation.

(Method of Generation of Signal Sequences Having No Periodic Correlation)

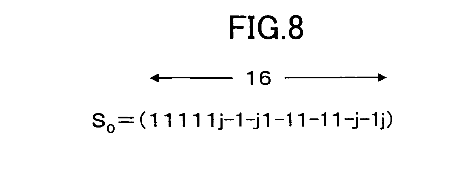

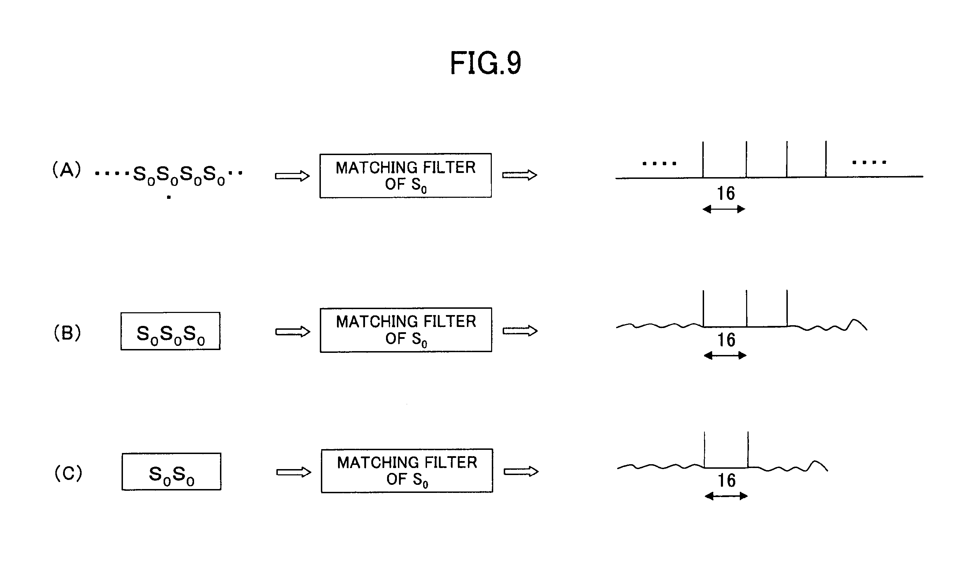

If a signal sequence A and a signal sequence B are referred to as having no periodic correlation in the present specification, it means that not only there is no cross correlation between the signal sequence A and the signal sequence B but also there is no cross correlation between a cyclic redundant signal sequence of the sequence A and a cyclic redundant signal sequence of the sequence B.
Next, a description will be given of a method of generation of signal sequences having no periodic correlation which is appropriate for use in the transmitting/receiving system shown in FIG. 1 or FIG. 6.
Referring to FIG. 8, a description will be given of a method of generation of multiple signal sequences having no periodic correlation from a signal sequence $S_0$ which is one of 4-phase orthogonal signal sequences having a period of 16 bits.
This signal sequence $S_0$ has a high autocorrelation. When the sequence $S_0$ which is repeated infinitely passes through a matching filter of sequence $S_0$, a series of pulses which continues infinitely at intervals of 16 bits can be obtained at the output of the filter as shown in FIG. 9 (A).
When the three consecutive sequences $S_0$ pass through the matching filter of sequence $S_0$, three pulses at intervals of 16 bits can be obtained at the output of the filter as shown in FIG. 9 (B).
When the two consecutive sequences $S_0$ passes through the matching filter of sequence $S_0$, two pulses at an interval of 16 bits can be obtained at the output of the filter as shown in FIG. 9 (C).
Next, a description will be given of a DFT (Discrete Fourier Transform) matrix of N rows and N columns will be explained.
The DFT matrix $F_N$ of N rows and N columns is represented by the following formulas:

$$F_N = [f_N(i, j)] \qquad \cdots (6)$$

where i is a row number and $0 \leq i \leq N-1$, and j is a column number and $0 \leq j \leq N-1$; and

$$f_N(i, j) = \frac{1}{\sqrt{N}} \exp\left(\frac{2\pi\sqrt{-1}}{N} i j\right) \qquad \cdots (7).$$

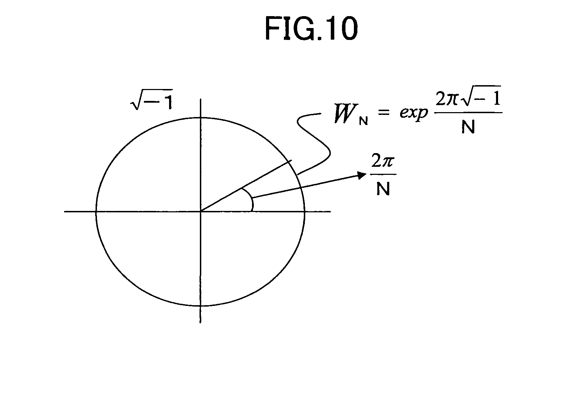

As shown in FIG. 10, a definition is given of a variable $W_N$ which is equivalent to one of equally divided N points of a unit circle in a complex plane as follows.

$$W_N \equiv \exp\frac{2\pi\sqrt{-1}}{N} \qquad \ldots \ (8)$$

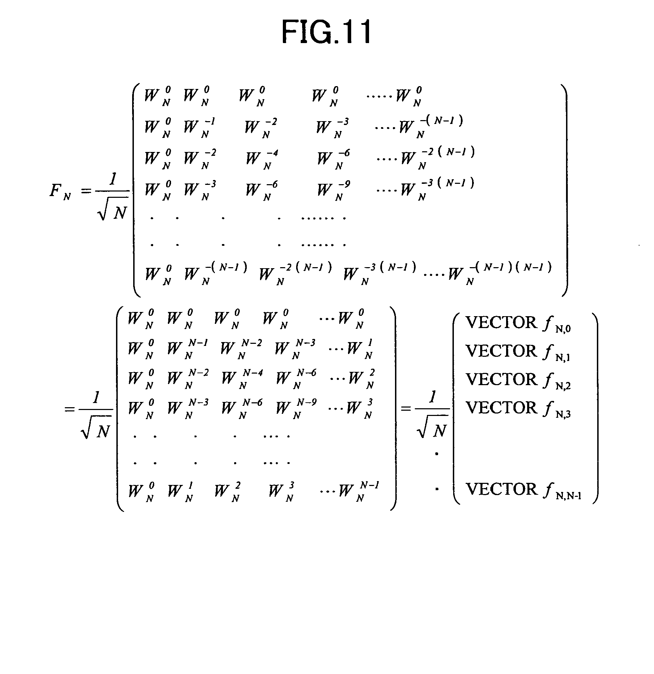

If the variable $W_N$ is used, the DFT matrix $F_N$ is rewritten as shown in FIG. 11. $W_N$ is called a rotator and the following relations are satisfied.

$$W_N{}^N = e^{j2\pi} = 1 \qquad \ldots \ (9)$$

$$W^{N-k} = W^{2N-k} = \cdots = W^k \qquad \ldots \ (10)$$

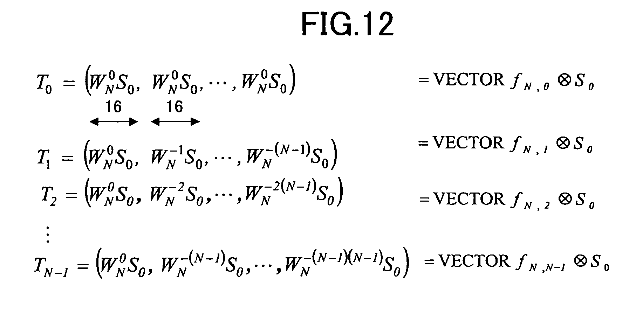

As shown in FIG. 12, new signal sequences $T_0$, $T_1$, $T_2$, and ... $T_{N-1}$ which have no periodic correlation are generated from each of the respective row vectors of the DFT matrix $F_N$ shown in FIG. 11 and the signal sequence $S_0$.

For example, $T_0$ is a signal sequence with a length of 16 x N bits and it is represented by the formula: $T_0 =$ ($W_N{}^0S_0$, $W_N{}^0S_0$, ..., $W_N{}^0S_0$) = vector $f_{N,0} \otimes S_0$ where $\otimes$ denotes Kronecker product.

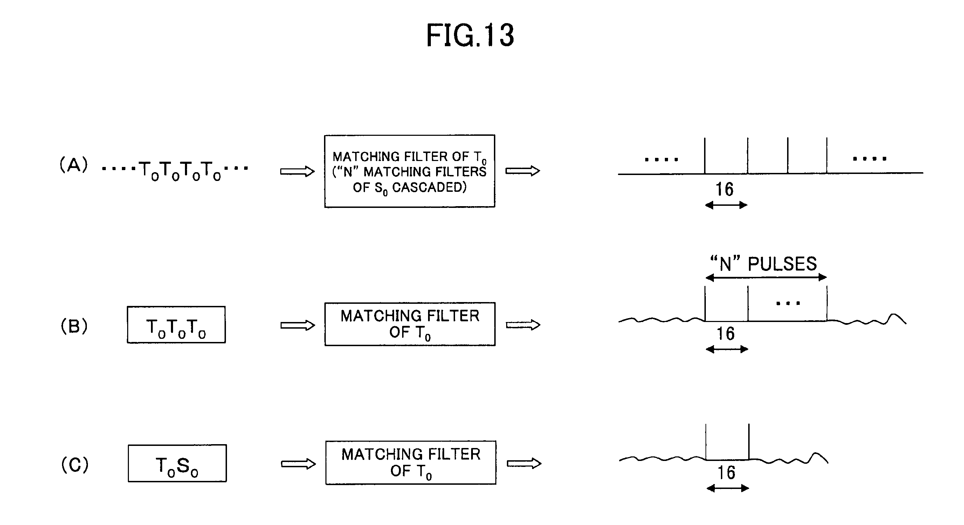

When signal sequences $T_0$ having no periodic correlation pass through a matching filter of sequence $T_0$, an output pulse of the filter is obtained as shown in FIG. 13.

FIG. 13 (A) shows a case where the signal sequence $T_0$ having no periodic correlation which is repeated infinitely passes through the matching filter of sequence $T_0$. In this case, a series of pulses which continues infinitely at intervals of 16 bits can be obtained at the output of the filter similar to the case of FIG. 9 (A).

When the three consecutive sequences $T_0$ pass through the matching filter of sequence $T_0$, N pulses at intervals of 16 bits can be obtained as shown in FIG. 13 (B).

When the sequences $T_0S_0$ pass through the matching filter of sequence $T_0$, two pulses at an interval of 16 bits can be obtained at the output of the filter as shown in FIG. 13 (C).

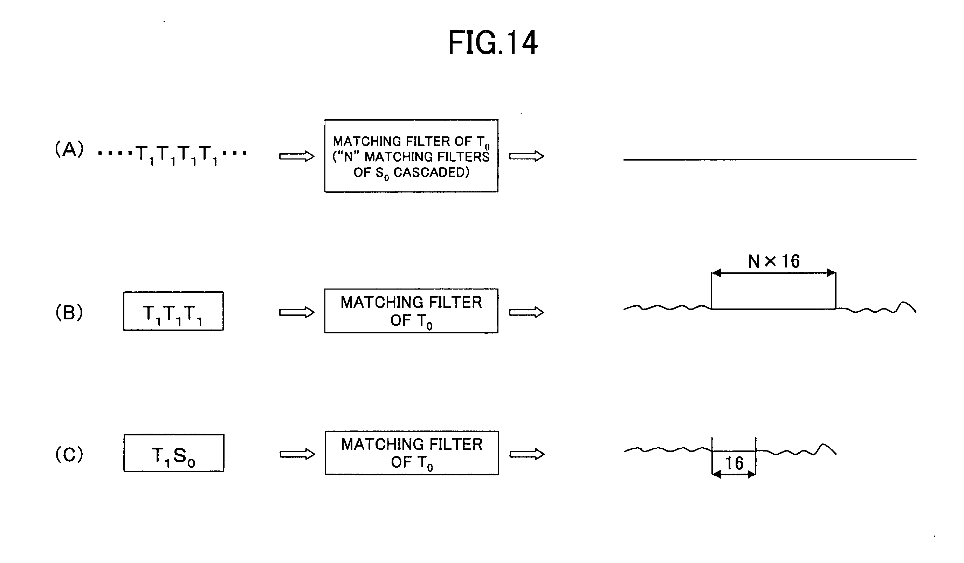

On the other hand, when signal sequences $T_1$ having no periodic correlation pass through the matching filter of sequence $T_0$, an output pulse of the filter is obtained as shown in FIG. 14.

FIG. 14 (A) shows a case where the signal sequence $T_1$ having no periodic correlation which is repeated infinitely passes through the matching filter of sequence $T_0$. In this case, the output of the filter becomes zero without noise.

When the three consecutive sequences $T_1$ pass through the matching filter of sequence $T_0$, the output of the filter becomes zero without noise for a duration of N x 16 bits as shown in FIG. 14 (B) .

When the sequences $T_1S_0$ pass through the matching filter of sequence $T_0$, the output of the filter becomes zero without noise for a duration of 16 bits as shown in FIG. 14 (C).

When the sequences $T_1S_0$ (half) in which the sequence $T_1$ is followed by a half of the sequence $S_0$ pass through the matching filter of sequence $T_0$, the output of the filter becomes zero without noise for a duration of 8 bits which is a half of the 16-bit duration.

Therefore, if a time delay for 16 bits of reception of a multiple path wave to reception of a direct wave arises, transmitting the sequences $T_1S_0$ is needed for the purpose of multiple path detection.

However, if a time delay for 8 bits of reception of a multiple path wave to reception of a direct wave arises, transmitting the sequences $T_1S_0$ (half) is sufficient for the purpose of multiple path detection.

As is apparent from FIG. 13 and FIG. 14, the sequences $T_0$, $T_1$, $T_2$, ... $T_{N-1}$ form the signal sequences having no periodic correlation. The shifted sequences of the above-mentioned sequences also form the signal sequences having no periodic correlation.

(Assignment of Signal Sequences Having No Periodic Correlation)

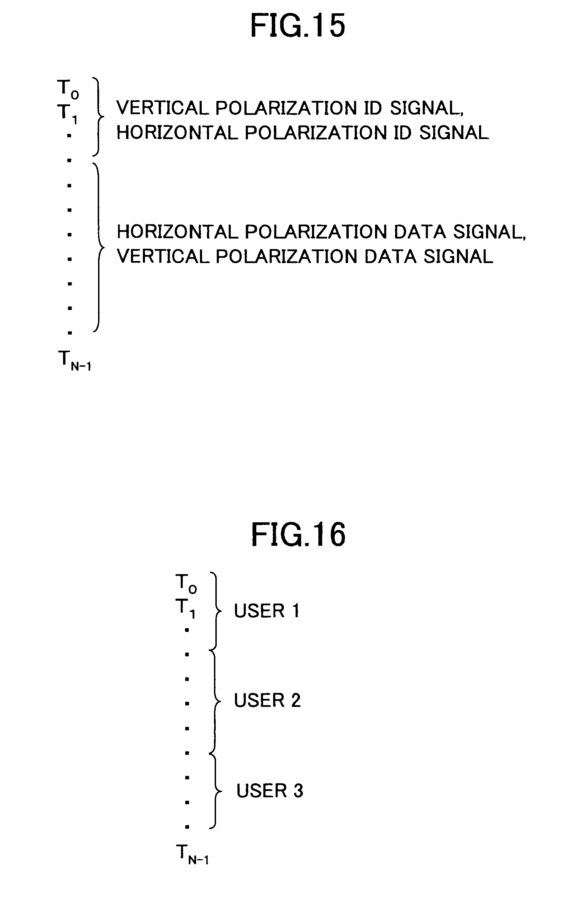

The thus obtained "N" signal sequences having no periodic correlation shown in FIG 12 can be assigned for the vertical polarization ID signal, the horizontal polarization ID signal, the horizontal polarization data signal, and the vertical polarization data signal as shown in FIG. 15.

Generally, the "N" signal sequences having no periodic correlation can be assigned for a plurality of users who perform communications as shown in FIG. 16.

(Generation of Other Signal Sequences Having No Periodic Correlation)

In the embodiment of FIG. 12, the "N" signal sequences having no periodic correlation are generated from the sequence $S_0$ by using the DFT matrix of N rows and N columns. A method of generation of other signal sequences having no periodic correlation from the "N" signal sequences having no periodic correlation by further using a DFT matrix of M rows and M columns will be explained.

Namely, this method is similar to the method of generation of the sequences $T_0, T_1, T_2, ... T_{N-1}$, and, in this method, new "N x M" signal sequences having no periodic correlation are respectively generated from a corresponding one of the sequences $T_0, T_1, T_2, ... T_{N-1}$ and a corresponding one of the row vectors of the DFT matrix $F_M$ of M rows and M columns.

The thus obtained "N x M" signal sequences having no periodic correlation may be assigned for a plurality of users respectively. Specifically, the assignment of the "N x M" signal sequences for the plurality of users is performed as follows.

For example, with respect to user A, a signal sequence $U_0$ ($T_0, T_1, T_2, ... T_{N-1}$) is generated from a signal sequence $S_0$, and new "N" signal sequences having no periodic correlation are generated using a vector $f_{M,0}$ of a DFT matrix $F_M$ having M columns and the signal sequence $U_0$ in accordance with the following formula (11):

$$\text{vector } f_{M,0} \otimes U_0 \qquad \text{... (11)}$$

where $\otimes$ denotes Kronecker product.

Moreover, with respect to user B, a signal sequence $U_1$ ($T'_0, T'_1, T'_2, ... T'_{N-1}$) is generated from a signal sequence $S'_0$, and new "N" signal sequences having no periodic correlation are generated using a vector $f_{M,1}$ of the DFT matrix $F_M$ having M columns and the sequence $U_1$ in accordance with the following formula (12):

$$\text{vector } f_{M,1} \otimes U_1 \qquad \text{... (12)}$$

In this manner, with respect to user M, a signal sequence $U_{M-1}$ is generated, and new "N" signal sequences having no periodic correlation are generated using a vector $f_{M,M-1}$ of the DFT matrix $F_M$ having M columns and the sequence $U_{M-1}$ in accordance with the following formula (13):

$$\text{vector } f_{M,M-1} \otimes U_{M-1} \qquad \text{... (13)}$$

In the above case, the signal sequence $S'_0$ may be identical to the signal sequence $S_0$.

In the above-mentioned embodiments of FIG. 1 and FIG. 6, the case in which a transmitting/receiving system includes a transmitter device and a receiver device has been explained. Alternatively, a transmitting/receiving system of the invention may include two communication devices each having a transmitter and a receiver.

(Modification 1)

In the above-mentioned embodiments, the vertical polarization ID signal, the horizontal polarization ID signal, the vertical polarization data signal, and the horizontal polarization data signal are referred to as being orthogonal signal sequences or signal sequences having no periodic correlation. Alternatively, the vertical polarization ID signal, the horizontal polarization ID signal, the vertical polarization data signal, and the horizontal polarization data signal may be signals that are generated from signal sequences having no mutual interference.

In the above-mentioned embodiments, the case in which vertical and horizontal polarization waves are used has been described. However, it is a matter of course that left and right elliptical polarization waves may be used instead of vertical and horizontal polarization waves.

As mentioned above, the signal sequences $T_0, T_1, T_2, ... T_{N-1}$ may be transmitted as transmission signals. Alternatively, the above-mentioned embodiment may be configured so that a predetermined operation (for example, multiplication or exclusive OR) between the data to be transmitted and the above-mentioned signal sequences is performed and the resulting signals obtained by the predetermined operation are transmitted as transmission signals.

Moreover, in the above-mentioned embodiment, the case in which the transmitter device includes a plurality of vertical polarization antennas and a plurality of horizontal polarization antennas and the receiver device includes a plurality of vertical polarization antennas and a plurality of horizontal polarization antennas has been explained. Alternatively, this invention is also applicable to a case in which the transmitter device includes a plurality of vertical polarization antennas and the receiver device includes a plurality of vertical polarization antennas (without horizontal polarization antenna). Alternatively, this invention is also applicable to a case in which the transmitter device includes a plurality of horizontal polarization antennas and the receiver device includes a plurality of horizontal polarization antennas (without vertical polarization antenna).

(Modification 2)

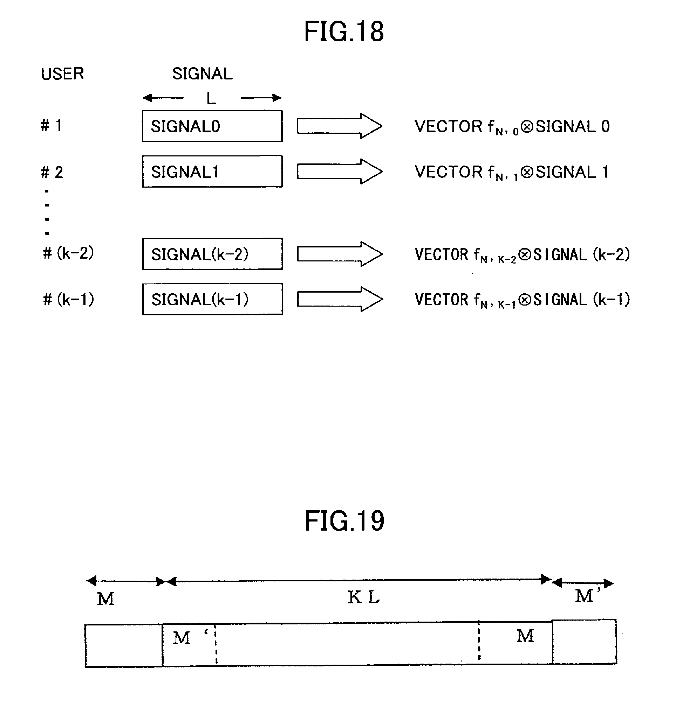

Referring to FIG. 18, a method of performing communications between "k" users will be explained.

In this method, the communications between the respective users are performed with the transmission signals which are generated using the respective row vectors of the DFT matrix $F_N$ of FIG. 11, as in the following:

the user #1 transmits signal 0 by using the vector $f_{N,0} \otimes$ signal 0;
the user #2 transmits signal 1 by using the vector $f_{N,1} \otimes$ signal 1;
....
the user #k-2 transmits signal (k-2) by using the vector $f_{N,k-2} \otimes$ signal (k-2) ; and
the user #k-1, transmits signal (k-1) by using the vector $f_{N,k-1} \otimes$ signal (k-1), where $\otimes$ denotes Kronecker product.

Since the respective row vectors of the DFT matrix $F_N$ have no periodic correlation, the transmission signals from the respective users have no periodic correlation.

The transmission signal from each user has a duration of KL as shown in FIG. 19. A guard interval may be formed in the transmission signal by adding a part of the transmission signal having a duration of M', located at the head end of the transmission signal (having the duration KL), to the tail end of the transmission signal, and adding a part of the transmission signal having a duration of M, located at the tail end of the transmission signal, to the head end of the transmission signal.

In the foregoing, the specifically given embodiments of the invention have been described. However, this invention is not limited to the above-described embodiments and variations and modifications may be made without departing from the scope of this invention.

This international application is based on and claims the benefit of priority of Japanese patent application No. 2005-026497, filed on February 2, 2005, the entire contents of which are hereby incorporated.

**Claims**

1. A transmitting/receiving method in which a transmitter transmits a vertical polarization signal and a horizontal polarization signal and a receiver receives the vertical polarization signal and the horizontal polarization signal from the transmitter, the transmitting/receiving method comprising:

   providing the vertical polarization signal to include a vertical polarization ID signal which identifies vertical polarization and a vertical polarization data signal which is a data signal;
   providing the horizontal polarization signal to include a horizontal polarization ID signal which identifies horizontal polarization and a horizontal polarization data signal which is a data signal;
   transmitting the vertical polarization ID signal and the horizontal polarization ID signal simultaneously;
   generating the vertical polarization ID signal, the horizontal polarization ID signal, and the vertical polarization data signal from signal sequences having orthogonal correlation; and
   generating the vertical polarization ID signal, the horizontal polarization ID signal, and the horizontal polarization data signal from signal sequences having orthogonal correlation.

2. A transmitting/receiving method in which a transmitter includes N vertical polarization antennas and M horizontal polarization antennas where N is an integer above or equal to zero, M is an integer above or equal to zero, and (N+M) $\geq$ 2, the transmitter transmitting vertical polarization signals by the N vertical polarization antennas and horizontal polarization signals by the M horizontal polarization antennas, and a receiver receives the vertical polarization signals and the horizontal polarization signals from the transmitter at vertical polarization antennas and horizontal polarization antennas respectively, the transmitting/receiving method comprising:

   providing each vertical polarization signal to include a vertical polarization ID signal which identifies vertical polarization and a vertical polarization data signal which is a data signal;

providing each horizontal polarization signal to include a horizontal polarization ID signal which identifies horizontal polarization and a horizontal polarization data signal which is a data signal;

providing the vertical polarization ID signals to be discretely different for each of the respective N vertical polarization antennas;

providing the horizontal polarization ID signals to be discretely different for each of the respective M horizontal polarization antennas;

transmitting the vertical polarization ID signals and the horizontal polarization ID signals simultaneously;

generating the N vertical polarization ID signals, the M horizontal polarization ID signals, and the vertical polarization data signals from signal sequences having orthogonal correlation; and

generating the N vertical polarization ID signals, the M horizontal polarization ID signals, and the horizontal polarization data signals from signal sequences having orthogonal correlation.

**3.** The transmitting/receiving method according to claim 1 or 2, wherein left elliptical polarization and right elliptical polarization are used instead of the vertical polarization and the horizontal polarization.

**4.** A communication device comprising:

a transmitter transmitting a vertical polarization signal and a horizontal polarization signal; and

a receiver receiving a vertical polarization signal and a horizontal polarization signal transmitted by another communication device,

wherein the vertical polarization signal is provided to include a vertical polarization ID signal which identifies vertical polarization and a vertical polarization data signal which is a data signal, and the horizontal polarization signal is provided to include a horizontal polarization ID signal which identifies horizontal polarization and a horizontal polarization data signal which is a data signal,

wherein the transmitter is provided to transmit the vertical polarization ID signal and the horizontal polarization ID signal simultaneously,

wherein the transmitter is provided to generate the vertical polarization ID signal, the horizontal polarization ID signal, and the vertical polarization data signal from signal sequences having orthogonal correlation, and generate the vertical polarization ID signal, the horizontal polarization ID signal, and the horizontal polarization data signal from signal sequences having orthogonal correlation.

**5.** A communication device comprising:

a transmitter including N vertical polarization antennas and M horizontal polarization antennas where N is an integer above or equal to zero, M is an integer above or equal to zero, and $(N+M) \geq 2$, the transmitter transmitting vertical polarization signals by the N vertical polarization antennas and horizontal polarization signals by the M horizontal polarization antennas; and

a receiver receiving vertical polarization signals and horizontal polarization signals from another communication device at vertical polarization antennas and horizontal polarization antennas respectively,

wherein each vertical polarization signal is provided to include a vertical polarization ID signal which identifies vertical polarization and a vertical polarization data signal which is a data signal, and each horizontal polarization signal is provided to include a horizontal polarization ID signal which identifies horizontal polarization and a horizontal polarization data signal which is a data signal,

wherein the vertical polarization ID signals are provided to be discretely different for each of the respective N vertical polarization antennas, and the horizontal polarization ID signals are provided to be discretely different for each of the respective M horizontal polarization antennas,

wherein the transmitter is provided to transmit the vertical polarization ID signals and the horizontal polarization ID signals simultaneously, and

wherein the transmitter is provided to generate the N vertical polarization ID signals, the M horizontal polarization ID signals, and the vertical polarization data signals from signal sequences having orthogonal correlation, and generate the N vertical polarization ID signals, the M horizontal polarization ID signals, and the horizontal polarization data signals from signal sequences having orthogonal correlation.

**6.** The communication device according to claim 4 or 5 wherein left elliptical polarization and right elliptical polarization are used instead of the vertical polarization and the horizontal polarization.

**7.** A method of generation of signal sequences having no periodic correlation, comprising:

providing a predetermined signal sequence $S_0$;

providing N row vectors of a DFT matrix $F_N$ of N rows and N columns which are respectively represented by vector $f_0$, vector $f_1$, ... vector $f_{N-1}$;

generating signal sequences $T_0$, $T_1$, $T_2$, ... $T_{N-1}$ which are represented by

$$T_0 = \text{vector } f_{N,0} \otimes S_0,$$

$$T_1 = \text{vector } f_{N,1} \otimes S_0,$$

$$T_2 = \text{vector } f_{N,2} \otimes S_0,$$

$$\ldots$$

$$T_{N-1} = \text{vector } f_{N,N-1} \otimes S_0$$

where $\otimes$ denotes Kronecker product; and

generating N x M signal sequences having no periodic correlation by taking a Kronecker product between a corresponding one of the signals sequences $T_0$, $T_1$, $T_2$, ... $T_{N-1}$ and a corresponding one of M row vectors of a DFT matrix $F_M$ of M rows and M columns including vector $f_0$, vector $f_1$, ... vector $f_{M-1}$, respectively.

8. The communication device according to claim 4 or 5, wherein the transmitter is provided to generate the vertical polarization ID signal, the horizontal polarization ID signal, the vertical polarization data signal, and the horizontal polarization data signal from signal sequences having no mutual interference which are generated in accordance with the method of generation of the signal sequences having no periodic correlation according to claim 7.

9. The communication device according to claim 8, wherein left elliptical polarization and right elliptical polarization are used instead of the vertical polarization and the horizontal polarization.

10. The communication device according to claim 4 or 5, wherein, when k data signals to be transmitted by k communication devices where k is an integer equal to 2 or above are represented by signal 0, signal 1, ..., signal (k-2), and signal (k-1), respectively, and N row vectors of a DFT matrix $F_N$ of N rows and N columns are represented by vector $f_0$, vector $f_1$, ... vector $f_{N-1}$, respectively, the k communication devices are provided to respectively transmit vector $f_{N,0} \otimes$ signal 0, vector $f_{N,1} \otimes$ signal 1, ... vector $f_{N,k-2} \otimes$ signal (k-2), vector $f_{N,k-1} \otimes$ signal (k-1) where $\otimes$ denotes Kronecker product.

# FIG.1

VERTICAL
12 POLARIZATION
ANTENNA

HORIZONTAL
13 POLARIZATION
ANTENNA

TRANSMITTER
DEVICE

11

VERTICAL
22 POLARIZATION
ANTENNA

23 HORIZONTAL
POLARIZATION
ANTENNA

RECEIVER
DEVICE

21

EP 1 845 647 A1

# FIG.2

SIGNAL $x_1$ : VERTICAL POLARIZATION SIGNAL
= VERTICAL POLARIZATION ID SIGNAL
+ VERTICAL POLARIZATION DATA SIGNAL
SIGNAL $x_2$ : HORIZONTAL POLARIZATION SIGNAL
= HORIZONTAL POLARIZATION ID SIGNAL
+ HORIZONTAL POLARIZATION DATA SIGNAL

# FIG.3

## (A) VERTICAL POLARIZATION SIGNAL

| | |
|---|---|
| VERTICAL POLARIZATION ID SIGNAL | #0 |
| VERTICAL POLARIZATION DATA SIGNAL | #2～#15 |

## (B) HORIZONTAL POLARIZATION SIGNAL

| | |
|---|---|
| HORIZONTAL POLARIZATION ID SIGNAL | #1 |
| HORIZONTAL POLARIZATION DATA SIGNAL | #16～#29 |

# FIG.4

(A)

OUTPUT IS REPRESENTED BY COMPLEX NUMBER

(B)

# FIG.5

DIRECT WAVE

REFLECTED WAVE

REFLECTED WAVE

## FIG.6

TRANSMITTER DEVICE — 30

31 32 33 34

RECEIVER DEVICE — 40

42 41 43 44

# FIG.7

(A) VERTICAL POLARIZATION SIGNAL (ANTENNA 31)

| | |
|---|---|
| VERTICAL POLARIZATION ID SIGNAL | #0 |
| VERTICAL POLARIZATION DATA SIGNAL | #2~#15 |

(B) VERTICAL POLARIZATION SIGNAL (ANTENNA 32)

| | |
|---|---|
| VERTICAL POLARIZATION ID SIGNAL | #0' |
| VERTICAL POLARIZATION DATA SIGNAL | #2'~#15' |

(C) HORIZONTAL POLARIZATION SIGNAL (ANTENNA 33)

| | |
|---|---|
| HORIZONTAL POLARIZATION ID SIGNAL | #1 |
| HORIZONTAL POLARIZATION DATA SIGNAL | #16~#29 |

(D) HORIZONTAL POLARIZATION SIGNAL (ANTENNA 34)

| | |
|---|---|
| HORIZONTAL POLARIZATION ID SIGNAL | #1' |
| HORIZONTAL POLARIZATION DATA SIGNAL | #16'~#29' |

# FIG.8

$\longleftarrow \quad 16 \quad \longrightarrow$

$S_0 = (\,1\,1\,1\,1\,1\,j\,-1\,-j\,1\,-1\,1\,-1\,1\,-j\,-1\,j\,)$

# FIG.9

(A) $\cdots S_0 S_0 S_0 S_0 \cdots$ $\Rightarrow$ | MATCHING FILTER OF $S_0$ | $\Rightarrow$

16

(B) | $S_0 S_0 S_0$ | $\Rightarrow$ | MATCHING FILTER OF $S_0$ | $\Rightarrow$

16

(C) | $S_0 S_0$ | $\Rightarrow$ | MATCHING FILTER OF $S_0$ | $\Rightarrow$

16

EP 1 845 647 A1

# FIG.10

$$W_N = exp \frac{2\pi\sqrt{-1}}{N}$$

$\sqrt{-1}$

$\frac{2\pi}{N}$

# FIG.11

$$F_N = \frac{1}{\sqrt{N}}\begin{pmatrix} W_N^0 & W_N^0 & W_N^0 & W_N^0 & \cdots W_N^0 \\ W_N^0 & W_N^{-1} & W_N^{-2} & W_N^{-3} & \cdots W_N^{-(N-1)} \\ W_N^0 & W_N^{-2} & W_N^{-4} & W_N^{-6} & \cdots W_N^{-2(N-1)} \\ W_N^0 & W_N^{-3} & W_N^{-6} & W_N^{-9} & \cdots W_N^{-3(N-1)} \\ \cdot & \cdot & \cdot & \cdot & \cdots \cdot \\ \cdot & \cdot & \cdot & \cdot & \cdots \cdot \\ W_N^0 & W_N^{-(N-1)} & W_N^{-2(N-1)} & W_N^{-3(N-1)} & \cdots W_N^{-(N-1)(N-1)} \end{pmatrix}$$

$$= \frac{1}{\sqrt{N}}\begin{pmatrix} W_N^0 & W_N^0 & W_N^0 & W_N^0 & \cdots W_N^0 \\ W_N^0 & W_N^{N-1} & W_N^{N-2} & W_N^{N-3} & \cdots W_N^1 \\ W_N^0 & W_N^{N-2} & W_N^{N-4} & W_N^{N-6} & \cdots W_N^2 \\ W_N^0 & W_N^{N-3} & W_N^{N-6} & W_N^{N-9} & \cdots W_N^3 \\ \cdot & \cdot & \cdot & \cdot & \cdots \cdot \\ \cdot & \cdot & \cdot & \cdot & \cdots \cdot \\ W_N^0 & W_N^1 & W_N^2 & W_N^3 & \cdots W_N^{N-1} \end{pmatrix} = \frac{1}{\sqrt{N}}\begin{pmatrix} \text{VECTOR } f_{N,0} \\ \text{VECTOR } f_{N,1} \\ \text{VECTOR } f_{N,2} \\ \text{VECTOR } f_{N,3} \\ \cdot \\ \cdot \\ \text{VECTOR } f_{N,N-1} \end{pmatrix}$$

# FIG.12

$$T_0 = \left( W_N^0 S_0, \ W_N^0 S_0, \cdots, W_N^0 S_0 \right) \qquad = \text{VECTOR } f_{N,0} \otimes S_0$$

$$\underset{16}{\longleftrightarrow} \quad \underset{16}{\longleftrightarrow}$$

$$T_1 = \left( W_N^0 S_0, \ W_N^{-1} S_0, \cdots, W_N^{-(N-1)} S_0 \right) \qquad = \text{VECTOR } f_{N,1} \otimes S_0$$

$$T_2 = \left( W_N^0 S_0, \ W_N^{-2} S_0, \cdots, W_N^{-2(N-1)} S_0 \right) \qquad = \text{VECTOR } f_{N,2} \otimes S_0$$

$$\vdots$$

$$T_{N-1} = \left( W_N^0 S_0, \ W_N^{-(N-1)} S_0, \cdots, W_N^{-(N-1)(N-1)} S_0 \right) = \text{VECTOR } f_{N,N-1} \otimes S_0$$

# FIG.13

EP 1 845 647 A1

(A) $\cdots T_0 T_0 T_0 T_0 \cdots$ $\Rightarrow$ MATCHING FILTER OF $T_0$ ("N" MATCHING FILTERS OF $S_0$ CASCADED) $\Rightarrow$

16

(B) $T_0 T_0 T_0$ $\Rightarrow$ MATCHING FILTER OF $T_0$ $\Rightarrow$

"N" PULSES

16

(C) $T_0 S_0$ $\Rightarrow$ MATCHING FILTER OF $T_0$ $\Rightarrow$

16

# FIG.14

(A) $\cdots T_1 T_1 T_1 T_1 \cdots$ $\Rightarrow$ 

MATCHING FILTER OF $T_0$ ("N" MATCHING FILTERS OF $S_0$ CASCADED) $\Rightarrow$

(B) $\boxed{T_1 T_1 T_1}$ $\Rightarrow$ 

MATCHING FILTER OF $T_0$ $\Rightarrow$

$N \times 16$

(C) $\boxed{T_1 S_0}$ $\Rightarrow$ 

MATCHING FILTER OF $T_0$ $\Rightarrow$

16

EP 1 845 647 A1

# FIG.15

$T_0$
$T_1$
·
}  VERTICAL POLARIZATION ID SIGNAL,
HORIZONTAL POLARIZATION ID SIGNAL

·
·
·
·
·
·
·
·
}  HORIZONTAL POLARIZATION DATA SIGNAL,
VERTICAL POLARIZATION DATA SIGNAL

$T_{N-1}$

# FIG.16

$T_0$
$T_1$
·  }  USER 1

·
·
·  }  USER 2

·
·
·  }  USER 3

·
$T_{N-1}$

# FIG.17

$S_0 \Rightarrow$ $\left.\begin{array}{c} T_0 \\ T_1 \\ . \\ . \\ . \\ . \\ T_{N-1} \end{array}\right\}$ SIGNAL $U_0$ $\Rightarrow$ $U_0 \otimes \text{VECTOR } f_{M,0}$

$S'_0 \Rightarrow$ $\left.\begin{array}{c} T'_0 \\ T'_1 \\ . \\ . \\ . \\ . \\ T'_{N-1} \end{array}\right\}$ SIGNAL $U_1$ $\Rightarrow$ $U_1 \otimes \text{VECTOR } f_{M,1}$

.
.
.

SIGNAL $U_{M-1}$ $\Rightarrow$ $U_{M-1} \otimes \text{VECTOR } f_{M,M-1}$

# FIG.18

USER       SIGNAL

$\longleftarrow$ L $\longrightarrow$

\# 1    | SIGNAL0 | $\Longrightarrow$   VECTOR $f_{N,0} \otimes$ SIGNAL 0

\# 2    | SIGNAL1 | $\Longrightarrow$   VECTOR $f_{N,1} \otimes$ SIGNAL 1

.
.
.

\# (k-2)    | SIGNAL(k-2) | $\Longrightarrow$   VECTOR $f_{N,K-2} \otimes$ SIGNAL (k-2)

\# (k-1)    | SIGNAL(k-1) | $\Longrightarrow$   VECTOR $f_{N,K-1} \otimes$ SIGNAL (k-1)

# FIG.19

M             K L             M'

M'             M

<div style="text-align:center">

**INTERNATIONAL SEARCH REPORT**

</div>

| | International application No. |
|---|---|
| | PCT/JP2006/301699 |

| A. CLASSIFICATION OF SUBJECT MATTER |
|---|
| ***H04J11/00*** (2006.01) |

According to International Patent Classification (IPC) or to both national classification and IPC

| B. FIELDS SEARCHED |
|---|
| Minimum documentation searched (classification system followed by classification symbols) |
| ***H04J11/00*** (2006.01) |

Documentation searched other than minimum documentation to the extent that such documents are included in the fields searched

| Jitsuyo Shinan Koho | 1922-1996 | Jitsuyo Shinan Toroku Koho | 1996-2006 |
|---|---|---|---|
| Kokai Jitsuyo Shinan Koho | 1971-2006 | Toroku Jitsuyo Shinan Koho | 1994-2006 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2004/021598 A1 (Yokohama TLO Co., Ltd.),<br>11 March, 2004 (11.03.04),<br>Full text; all drawings<br>& AU 2003261817 A1 & EP 1542372 A1<br>& US 2005/0243944 A1 & CN 1679252 A | 7<br>8-10 |
| X<br>Y | JP 2003-023675 A (Noriyoshi KUROYANAGI),<br>24 January, 2003 (24.01.03),<br>Par. No. [0024]<br>& WO 2003/005757 A1 | 7<br>8-10 |
| Y | JP 2003-134041 A (Matsushita Electric<br>Industrial Co., Ltd.),<br>09 May, 2003 (09.05.03),<br>Par. No. [0007]<br>(Family: none) | 1-6,8-10 |

[X] Further documents are listed in the continuation of Box C.  [ ] See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>01 May, 2006 (01.05.06) | Date of mailing of the international search report<br>16 May, 2006 (16.05.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/301699 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 03-163926 A (NEC Corp.), 15 July, 1991 (15.07.91), Page 4, line 18 to page 5, line 10 (Family: none) | 1-6,8-10 |
| Y | JP 03-013136 A (Nippon Telegraph And Telephone Corp.), 22 January, 1991 (22.01.91), Page 2, right column, line 16 to page 3, left column, line 14 (Family: none) | 1-6,8-10 |
| Y | JP 2001-177439 A (KDD Kabushiki Kaisha), 29 June, 2001 (29.06.01), Par. No. [0011] (Family: none) | 1-6,8-10 |
| A | JP 2002-374224 A (Nippon Telegraph And Telephone Corp.), 26 December, 2002 (26.12.02), Par. Nos. [0049] to [0052] & EP 1249980 A2 & US 2002/0191535 A1 & CA 2380977 A1 & KR 2002079489 A & CN 1380778 A & JP 2003-060604 A & JP 2003-124907 A & JP 3590008 B2 & JP 3631698 B2 & JP 3676281 B2 | 1-6,8-10 |
| A | WO 2004/021597 A1 (Yokohama TLO Co., Ltd.), 11 March, 2004 (11.03.04), Full text; all drawings & AU 2003261816 A1 & EP 1545020 A1 & US 2006/0002582 A1 & CN 1679251 A | 7 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3171329 B
- JP 9214461 A
- JP 2005026497 A